# EUROPÄISCHE PATENTANMELDUNG

(11) **EP 0 595 189 A1**
(43) Veröffentlichungstag der Anmeldung: **04.05.1994**
(21) Anmeldenummer: 93117025.2
(22) Anmeldetag: 21.10.1993
(51) Int. Cl.: B29C 47/78, B29C 45/74

(54) **Verfahren zum Plastifizieren von Kunststoff**

(30) Priorität: 29.10.1992 DE 4236497
(71) Anmelder: FRIEDRICH THEYSOHN GmbH, D-30853 Langenhagen (DE)
(72) Erfinder: Habisohn, Helmut, A-2333 Leopoldsdorf (AT); Krüger, Ernst, Dr.-Ing., D-49124 Georgsmarienhütte (DE)
(74) Vertreter: Döring, Roger, Dipl.-Ing.

(57) **Zusammenfassung**

Es wird ein Verfahren zum Plastifizieren von Kunststoff angegeben, bei dem eine Plastifiziereinheit mit einem Schneckengehäuse und mindestens einer drehbar in demselben gelagerten Schnecke eingesetzt wird. Der Kunststoff wird während des Betriebs der Plastifiziereinheit mittels Hochfrequenz erwärmt. Die Erwärmung des Kunststoffs wird gezielt in begrenzten Bereichen, in denen keine durch das Zusammenwirken von Schnecke und Schneckengehäuse hervorgerufene Friktion besteht, durchgeführt.

## Beschreibung

Die Erfindung bezieht sich auf ein Verfahren zum Plastifizieren von Kunststoff, unter Verwendung einer Plastifiziereinheit mit einem Schneckengehäuse und mindestens einer drehbar in demselben gelagerten Schnecke, mit welchem Kunststoff in das Schneckengehäuse eingefüllt und durch die sich drehende Schnecke zu einem Werkzeug gefördert wird und mit welchem der Kunststoff während des Betriebs der Plastifiziereinheit mittels Hochfrequenz erwärmt wird (DE-OS 40 24 070).

Zur Herstellung von Profilkörpern gleichbleibender Qualität ist es erforderlich, daß der aus der Plastifiziereinheit - im folgenden kurz "Extruder" genannt - austretende Kunststoff möglichst gleichmäßig und homogen aufgeschmolzen wird. Da bei bestimmten Kunststoffen die vom Extruder erzeugte Friktion dafür nicht ausreicht, ist es bekannt geworden, die Extruder zusätzlich zu beheizen.

Bei dem bekannten Verfahren nach der eingangs erwähnten DE-OS 40 24 070 wird für die Erwärmung Hochfrequenz eingesetzt. Als Elektroden werden dabei das Schneckengehäuse des Extruders einerseits und die Schnecke andererseits verwendet. Der zu verarbeitende Kunststoff wird dadurch über die ganze Länge des Schneckengehäuses zusätzlich erwärmt. Der Aufwand ist insbesondere wegen der hier erforderlichen isolierenden Zwischenschicht erheblich.

Der Erfindung liegt die Aufgabe zugrunde, das eingangs geschilderte Verfahren so weiterzubilden, daß der Aufwand für die Erwärmung des zu verarbeitenden Kunststoffs vermindert werden kann.

Diese Aufgabe wird gemäß der Erfindung dadurch gelöst, daß die Erwärmung des Kunststoffs gezielt in begrenzten Bereichen, in denen keine durch das Zusammenwirken von Schnecke und Schneckengehäuse hervorgerufene Friktion besteht, durchgeführt wird.

Mit diesem Verfahren wird die Erwärmung bzw. Erhitzung des Kunststoffs gezielt nur an Stellen eingesetzt, an denen keine hohe Erwärmung durch Friktion entsteht. Die entsprechenden Anordnungen der Elektroden zur Erzeugung der Hochfrequenzfelder können daher sehr einfach gestaltet werden. Bevorzugte Bereiche sind der Einzugsbereich des Extruders, in dem der zugeführte Kunststoff vorgewärmt wird, und der Austrittsbereich desselben, in dem durch die zusätzliche Erhitzung eine homogene Schmelze sichergestellt werden kann. Eine einfache Anordnung ohne isolierende Zwischenschicht ist gegeben, wenn die Elektroden auf einer Kreisbahn angeordnet werden. Die Elektroden unterschiedlicher Polarität liegen einander dann paarweise diametral gegenüber. Bei mehreren Paaren derartiger Elektroden kann auch ein umlaufendes Hochfrequenzfeld erzeugt werden.

Weitere vorteilhafte Ausgestaltungen der Erfindung gehen aus den Unteransprüchen hervor.

Das Verfahren nach der Erfindung wird im folgenden in Ausführungsbeispielen erläutert.

Im Einfülltrichter eines Extruders werden mindestens zwei einander diametral gegenüber liegende Elektroden zur Erzeugung eines Hochfrequenzfeldes angeordnet. Bei Durchführung des Verfahrens wird der beispielsweise als Granulat vorliegende Kunststoff mittels der an die beiden Elektroden angelegten Hochfrequenz vorgewärmt. Eine entsprechende Elektrodenanordnung im Austrittsbereich bzw. Werkzeug des Extruders bewirkt eine gezielte Erhitzung der Schmelze, wodurch deren Homogenität sichergestellt werden kann.

Eine Elektrodenanordnung zur Erzeugung eines Hochfrequenzfeldes kann auch zwischen einer Dosiereinrichtung und dem Extruder angeordnet werden, und zwar an einer Strecke, die vom Granulat des Kunststoffs im freien Fall passiert wird. Die Elektroden können auch in einer Anordnung angebracht werden, in welcher der Kunststoff an dem HF-Feld derselben vorbei gedrückt wird. Entsprechende Dosierstationen können mehrfach entlang der Plastifiziereinrichtung angeordnet werden. Das HF-Feld kann dabei auch dazu ausgenutzt werden, flüchtige Stoffe aus dem Kunststoff zu entfernen.

Ebenso ist es möglich, bei einer Kaskadenanordnung von zwei Extrudern nur am ersten Extruder eine Erwärmung mittels Hochfrequenz durchzuführen. Der zweite Extruder dient dann nur dem Druckaufbau und dem Austragen des Kunststoffs.

Elektrodenanordnungen zur Erzeugung von Hochfrequenzfeldern können an entsprechenden Stellen auch im Verlauf der Schnecke im Schneckengehäuse eingebaut werden. Dabei ist es möglich, die Elektroden so anzuordnen, daß sich über den Querschnitt des Schneckengehäuses verteilt segmentierte, durch HF beheizte Bereiche ergeben. Es können dadurch lokal unterschiedliche Fließbereiche erhalten werden. Damit ist eine gezielte Beeinflussung des Fließverhaltens des Kunststoffs im Schneckengehäuse und damit der Geometrieverhältnisse desselben möglich.

Eine Elektrodenanordnung zur Erzeugung eines HF-Feldes kann mit Vorteil auch im Dekompressionsbereich des Extruders angebracht werden. Dadurch kann das Einbringen zusätzlicher Stoffe in die Schmelze verbessert werden. Das gilt insbesondere dann, wenn die Zusatzstoffe stärker HF-aktiv sind.

Alle geschilderten Elektrodenanordnungen können einzeln oder in beliebiger Kombination eingesetzt und betrieben werden. Die gewünschte Erwärmung des Kunststoffs kann dabei auch durch Regelung der unterschiedlichen Elektrodenanordnungen erreicht werden.

Wenn beispielsweise drei Paare von einander diametral gegenüber liegenden Elektroden eingesetzt werden, die auf einer Kreisbahn jeweils um 120° gegeneinander versetzt sind, dann kann zur Verbesserung des Verfahrens ein umlaufendes Hochfrequenzfeld erzeugt werden. Es kann auch ein pulsierendes Hochfrequenzfeld eingesetzt werden.

Die Frequenz für die anzuwendenden Hochfrequenzfelder ist abhängig von der Art und dem Aufbau des zu verarbeitenden Kunststoffs. Sie kann im kHz-Bereich, im MHz-Bereich aber auch im GHz-Bereich liegen.

Das Verfahren ist besonders bei der Verarbeitung von Kunststoffen mit großen Dipolen geeignet. Solche Kunststoffe sind beispielsweise Polyvinvlchlorid, Polyamid und Polyoxymethylen. Aber auch andere Kunststoffe, wie beispielsweise Polyethylen und Polypropylen, sind verwendbar.

## Patentansprüche

1. Verfahren zum Plastifizieren von Kunststoff, unter Verwendung einer Plastifiziereinheit mit einem Schneckengehäuse und mindestens einer drehbar in demselben gelagerten Schnecke, mit welchem Kunststoff in das Schneckengehäuse eingefüllt und durch die sich drehende Schnecke zu einem Werkzeug gefördert wird und mit welchem der Kunststoff während des Betriebs der Plastifiziereinheit mittels Hochfrequenz erwärmt wird, dadurch gekennzeichnet, daß die Erwärmung des Kunststoffs gezielt in begrenzten Bereichen, in denen keine durch das Zusammenwirken von Schnecke und Schneckengehäuse hervorgerufene Friktion besteht, durchgeführt wird.

2. Verfahren nach Anspruch 1, dadurch gekennzeichnet, daß der Kunststoff im Einzugsbereich der Plastifiziereinheit vor seinem Eintritt in das Schneckengehäuse mittels Hochfrequenz vorgewärmt wird.

3. Verfahren nach Anspruch 1 oder 2, dadurch gekennzeichnet, daß der Kunststoff im Austrittsbereich der Plastifiziereinheit mittels Hochfrequenz auf die erforderliche Endtemperatur aufgeheizt wird.

4. Verfahren nach einem der Ansprüche 1 bis 3, dadurch gekennzeichnet, daß die Elektroden zur Erzeugung des HF-Feldes am bzw. im Schneckengehäuse so angeordnet werden, daß sich über den Querschnitt des Schneckengehäuses verteilte, segmentierte Heizbereiche ergeben.

5. Verfahren nach einem der Ansprüche 1 bis 4, dadurch gekennzeichnet, daß für die Erwärmung bzw. Beheizung des Kunststoffs ein pulsierendes Hochfrequenzfeld verwendet wird.

6. Verfahren nach einem der Ansprüche 1 bis 5, dadurch gekennzeichnet, daß für die Erwärmung bzw. Beheizung des Kunststoffs auf einer Kreisbahn angeordnete Elektroden verwendet werden, wobei die Elektroden unterschiedlicher Polarität einander diametral gegenüberliegend angeordnet werden.

7. Verfahren nach einem der Ansprüche 1 bis 6, dadurch gekennzeichnet, daß im Dekompressionsbereich der Plastifiziereinheit eine Elektrodenanordnung zur Erzeugung eines Hochfrequenz-Feldes angeordnet wird.
